(19) **Europäisches Patentamt / European Patent Office / Office européen des brevets**

(11) **EP 4 023 877 A1**

(12) **EUROPEAN PATENT APPLICATION**
published in accordance with Art. 153(4) EPC

(43) Date of publication:
06.07.2022 Bulletin 2022/27

(21) Application number: 20930037.5

(22) Date of filing: 28.08.2020

(51) International Patent Classification (IPC):
*F03D 7/00* (2006.01)

(52) Cooperative Patent Classification (CPC):
Y02E 10/72

(86) International application number:
PCT/CN2020/112048

(87) International publication number:
WO 2021/203612 (14.10.2021 Gazette 2021/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.04.2020 CN 202010273840

(71) Applicant: Zhejiang Windey Co., Ltd.
Zhejiang 311106 (CN)

(72) Inventors:
• YING, You
Hangzhou Yuhang Economic-Technological
Development Area (Qianjiang Economic
Development
Area) Hangzhou, Zhejiang 311106 (CN)
• SUN, Yong
Hangzhou Yuhang Economic-Technological
Development Area (Qianjiang Economic
Development
Area) Hangzhou, Zhejiang 311106 (CN)

• CHEN, Qi
Hangzhou Yuhang Economic-Technological
Development Area (Qianjiang Economic
Development
Area) Hangzhou, Zhejiang 311106 (CN)
• SHI, Xiaoming
Hangzhou Yuhang Economic-Technological
Development Area (Qianjiang Economic
Development
Area) Hangzhou, Zhejiang 311106 (CN)
• YANG, Jing
Hangzhou Yuhang Economic-Technological
Development Area (Qianjiang Economic
Development
Area) Hangzhou, Zhejiang 311106 (CN)
• CHENG, Chenguang
Hangzhou Yuhang Economic-Technological
Development Area (Qianjiang Economic
Development
Area) Hangzhou, Zhejiang 311106 (CN)

(74) Representative: V.O.
P.O. Box 87930
2508 DH Den Haag (NL)

(54) **METHOD AND SYSTEM FOR CONTROLLING ROTATIONAL SPEED RESONANT FREQUENCY CROSSING OF FLEXIBLE TOWER WIND TURBINE**

(57) A method and a system for controlling the rotational speed resonant frequency crossing of a flexible tower wind turbine. The method comprises: acquiring basic calculation data; processing acceleration ass of the left-right movement at the top of the tower; obtaining the root mean square of acceleration ass0 of the left-right movement at the top of the tower after a filter of an nth control period; and carrying out different running states according to a running flag bit A. The system comprises a tower modal online identification system (1), tower vibration sensors (2), and a speed measuring encoder (3), which are respectively connected to a system (4) for controlling the rotational speed resonant frequency crossing of a flexible tower wind turbine, the tower vibration sensors are uniformly installed on the tower from top to bottom. In the method and the system, adaptive control of a turbine rotational speed jump deviation value, a vibration amplitude, and a damping coefficient is achieved and the load of a flexible tower is reduced, thus ensuring the safety of a turbine; meanwhile, the wind turbine is enabled to operate in a maximum power point tracking mode for the majority of the time, evidently reducing power generation loss, and effectively improving the power generation efficiency of the wind turbine.

EP 4 023 877 A1

$\omega_0(n)$ and $B_0(n)$ are obtained and $a_{ss}(n)$, $\omega_r(n)$ and A are measured through a system, where an initial value of A is 0

Low-pass filtering and band-pass filtering are performed on $a_{ss}$ to obtain a filtered acceleration $a_{ss0}(n)$ of a top of a tower in a left-right direction

A 100s root-mean-square $a_{ss1}(n)$ and a 600s root-mean-square $a_{ss2}(n)$ of $a_{ss0}(n)$ are obtained

$A = 0$ — No

Yes

$\Delta\omega(n) = 0$

The wind wheel rotational speed of the wind turbine is controlled to operate along an optimal rotational speed curve under an MPPT mode

$a_{ss1}(n) \leq \varepsilon$ — No

Yes

A is set to 0

$\varepsilon < a_{ss1}(n) \leq 2\varepsilon$ — No

Yes

A is set to 1

$2\varepsilon < a_{ss1}(n) \leq 5\varepsilon$ — No

Yes

A is set to 2

$a_{ss1}(n) \geq 5\varepsilon$

Yes

A is set to 3

$A = 1$ — No

Yes

$$\Delta\omega(n) = C_0 * e^{\frac{a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1) < -k*T \end{cases}$$

$$\omega_1(n) = \omega_0(n) - \frac{\Delta\omega(n)}{2} \; ; \; \omega_2(n) = \omega_0(n) + \frac{\Delta\omega(n)}{2}$$

The wind wheel rotational speed of the wind turbine is controlled to operate along optimal control curves for a low-speed range or for a high-speed range, where a switch therebetween is controlled through a fast jump of rotational speed

$A = 2$ — No

Yes

$$\Delta\omega(n) = C_0 * e^{\frac{3a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1) < -k*T \end{cases}$$

$$\omega_1(n) = \omega_0(n) - \frac{\Delta\omega(n)}{2} \; ; \; \omega_2(n) = \omega_0(n) + \frac{\Delta\omega(n)}{2}$$

The wind wheel rotational speed of the wind turbine is controlled to operate along optimal control curves for a low-speed range or for a high-speed range, where a switch therebetween is controlled through a fast jump of rotational speed

$A = 3$

Yes

The wind turbine reports an excessive vibration fault and is shut down

**Figure 1**

**Description**

This application claims priority to Chinese Patent Application No. 202010273840.0, titled "METHOD AND SYSTEM FOR CONTROLLING ROTATIONAL SPEED RESONANT FREQUENCY CROSSING OF FLEXIBLE TOWER WIND TURBINE", filed on April 9, 2020 with the China National Intellectual Property Administration, which is incorporated herein by reference in its entirety.

**FIELD**

The present disclosure relates to the field of wind power generation, and in particular to a control method and a control system for crossing a rotational speed resonance frequency of a flexible tower wind turbine.

**BACKGROUND**

According to statistics, wind power is developing rapidly in China and has become the third largest energy source in China. An installed capacity of wind power in China has been the largest in the world for eight consecutive years. In recent years, the wind power technology presents a development trend of longer blades, larger unit capacity, and higher towers. As the tower becomes taller and taller, the conventional rigid tower with a first-order natural frequency between 1P and 3P within an operating speed range no longer meets design requirements for high towers. More and more tall towers adopt a flexible tower design, that is, the tower has the first-order natural frequency of 1P within the operating speed range.

With the flexible tower being adopted, within an operating speed range, the first-order natural frequency of the tower will have a resonance speed point with 1P of a certain operating speed. The resonance may cause a large load on the wind turbine and even cause threat on safety of the wind turbine. In a conventional solution, a wind wheel rotational speed jump control is used to control the wind wheel rotational speed to quickly cross through a tower resonance speed point. However, such control method may cause a huge loss of electricity production and cause a large economic loss, and requires the first-order resonance frequency of the tower to be accurately measured in advance, which is not convenient in practice.

Chinese patent No. CN104405581B discloses a method and system for controlling rotational speed of a wind turbine. The method includes: obtaining a rotational speed of a wind turbine, and obtaining a torque or power of the wind turbine; controlling the rotational speed of the wind turbine to jump to a lower limit of a rotational range corresponding to a preset resonance frequency band of the wind turbine, if the rotational speed is greater than or equal to a median of the rotational range corresponding to the preset resonance frequency band of the wind turbine, and the torque is less than a first preset torque or the power is less than a preset reference power; and controlling the rotational speed of the wind turbine to jump to an upper limit of the rotational range corresponding to the preset resonance frequency band of the wind turbine, if the rotational speed is less than the median, and the torque is greater than or equal to a second preset torque or the power is greater than or equal to the reference power. This technical solution causes a huge loss of electricity production and causes a great economic loss, and requires a first-order resonance frequency of a tower to be accurately measured in advance, which is not convenient in practice.

**SUMMARY**

A technical problem to be solved in the present disclosure is that the conventional method for controlling a rotational speed of a flexible tower wind turbine causes relatively huge loss of electricity production. A control method and a control system for crossing a rotational speed resonance frequency of a flexible tower wind turbine are provided in the present disclosure, in order to realize an adaptive control of a jump offset of a wind wheel rotational speed, a vibration amplitude, and a damping coefficient, and reduce a load of a flexible tower, and ensure safety of the wind turbine. Moreover, the wind turbine is operated in a maximum power tracking mode most of the time, which significantly reduces loss of electricity production and realizes an effective power usage.

The technical problems are solved through a technical solution in the present disclosure as follows.

A control method for crossing a rotational speed resonance frequency of a flexible tower wind turbine is provided. The method includes:

  (1) obtaining basic calculation data;
  (2) processing an acceleration $a_{ss}$ of a top of a tower in a left-right direction;
  (3) obtaining a root-mean-square of a filtered acceleration $a_{sso}$ of the top of the tower in a left-right direction in an n-th control period; and
  (4) performing different operation states based on different values of an operation flag A.

In an embodiment, the basic calculation data in step (1) includes: a damping ratio Bo(n) and a first-order modal frequency $\omega_0$(n) of the tower in the left-right direction in the n-th control period obtained through a tower modal on-line identification system; an acceleration ass(n) of the top of the tower in the left-right direction in the n-th control period obtained through a tower vibration sensor; a wind wheel rotational speed $\omega_r$(n) in the n-th control period measured by an encoder; and a flag A of an operation mode in the n-th control period, wherein an initial value of the flag A is set to 0.

In an embodiment, the step (2) includes: performing low-pass filtering and band-pass filtering on the acceleration ass of the top of the tower in the left-right direction to obtain the filtered acceleration $a_{ss0}$(n) of the top of the tower in the left-right direction.

In an embodiment, the step (3) includes: obtaining a 30-secend root-mean-square $a_{ss1}$(n) of the filtered acceleration asso of the top of the tower in the left-right direction in the n-th control period and a 600-secend root-mean-square $a_{ss2}$(n) of the filtered acceleration asso of the top of the tower in the left-right direction in the n-th control period.

In an embodiment, the step (4) includes: in a case where the flag A=0, determining a wind wheel rotational speed offset $\Delta\omega$(n) in the n-th control period as $\Delta\omega(n) = 0$; and

controlling a wind wheel rotational speed of a wind turbine to operate along an optimal rotational speed curve under a Maximum Power Point Tracking (MPPT) mode.

In an embodiment, the step (4) includes:

in a case where the flag A=1,

determining a jump offset $\Delta\omega$(n) of a wind wheel rotational speed in the n-th control period as

$$\Delta\omega(n) = C_0 * e^{\frac{a_{ss2}(n)}{B_0(n)}D},$$

where Co represents an initial value of the jump offset of the wind wheel rotational speed, and D represents a constant, and

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1 < -k*T \end{cases},$$

where $\Delta\omega$(n-1) represents a value of the jump offset of the wind wheel rotational speed in an (n-1)-th control period, k represents a limit value of the jump offset of the wind wheel rotational speed, and T represents a control period;

determining an upper limit $\omega_1$(n) of the wind wheel rotational speed in a low-speed range as

$$\omega_1(n) = \omega_0(n) - \frac{\Delta\omega(n)}{2};$$

determining a lower limit $\omega_2$(n) of the wind wheel rotational speed in a high-speed range as

$$\omega_2(n) = \omega_0(n) + \frac{\Delta\omega(n)}{2};$$

and

controlling the wind wheel rotational speed of the wind turbine to operate along an optimal control curve for the low-speed range, wherein the optimal control curve for the low-speed range has an upper limit of $\omega_1$(n) and a lower limit equal to a minimum stable value $\omega_{min}$ of the wind wheel rotational speed; or controlling the wind wheel rotational speed of the wind turbine to operate along an optimal control curve for the high-speed range, wherein the optimal control curve for the high-speed range has an upper limit equal to a maximum stable value $\omega_{max}$ of the wind wheel rotational speed and a lower limit of $\omega_2$(n), and wherein a switch between the optimal control curve for the low-speed range and the optimal control curve for the high-speed range is controlled through a fast jump of rotational speed.

In an embodiment, the step (4) includes:
in a case where the flag A=2,

determining a jump offset $\Delta\omega(n)$ of a wind wheel rotational speed in the n-th control period as

$$\Delta\omega(n) = C_0 * e^{\frac{3a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1 < -k*T \end{cases};$$

determining an upper limit $\omega_1(n)$ of the wind wheel rotational speed in a low-speed range as

$$\omega_1(n) = \omega_0(n) - \frac{\Delta\omega(n)}{2};$$

determining a lower limit $\omega_2(n)$ of the wind wheel rotational speed in a high-speed range as

$$\omega_2(n) = \omega_0(n) + \frac{\Delta\omega(n)}{2};$$

and

controlling the wind wheel rotational speed of the wind turbine to operate along an optimal control curve for the low-speed range, wherein the optimal control curve for the low-speed range has an upper limit of $\omega_1(n)$ and a lower limit equal to a minimum stable value $\omega_{min}$ of the wind wheel rotational speed, or controlling the wind wheel rotational speed of the wind turbine to operate along an optimal control curve for the high-speed range, wherein the optimal control curve for the high-speed range has an upper limit equal to a maximum stable value $\omega_{max}$ of the wind wheel rotational speed and a lower limit of $\omega_2(n)$, and wherein a switch between the optimal control curve for the low-speed range and the optimal control curve for the high-speed range is controlled through a fast jump of rotational speed.

In an embodiment, the step (4) includes: in a case where the flag A=3, reporting an excessive vibration fault and shutting down the wind turbine.
In an embodiment, the step (4) includes:

setting the flag A to 0, if $a_{ss1}(n) \leq \varepsilon$;

setting the flag A to 1, if $\varepsilon < a_{ss1}(n) \leq 2\varepsilon$;

setting the flag A to 2, if $2\varepsilon < a_{ss1}(n) \leq 5\varepsilon$; and

setting the flag A to 3, if $a_{ss1}(n) > 5\varepsilon$,

where $\varepsilon$ is a small positive value.

A control system for crossing a rotational speed resonance frequency of a flexible tower wind turbine is provided. The system includes a tower modal on-line identification system, a tower vibration sensor, and a speed measuring encoder. The tower modal on-line identification system, the tower vibration sensor, and the speed measuring encoder are connected to the control system for crossing rotational speed resonance frequency of the flexible tower wind turbine. The tower vibration sensor is mounted at as a top of a tower.

The present disclosure has the following advantageous effects. An adaptive control of a jump offset of a wind wheel rotational speed, a vibration amplitude, and a damping coefficient is realized, load of a flexible tower is reduced, and safety of a wind turbine is ensured. In addition, a wind turbine is operated in a maximum power tracking mode most of the time, which significantly reduces loss of electricity production and effectively improves power generation efficiency of the wind turbine.

**BRIEF DESCRIPTION OF THE DRAWINGS**

Figure 1 shows a flow chart of a control according to the present disclosure;

Figure 2 is a connection structural block diagram of a circuit principle according to the present disclosure; and

Figure 3 shows a curve of wind wheel rotational speed vs. turbine torque according to the present disclosure.

In the drawings, reference numeral:

1 tower modal on-line identification system,

2 tower vibration sensor,

3 speed measuring encoder, and

4 control system for crossing a rotational speed resonance frequency of a flexible tower wind turbine.

**DETAILED DESCRIPTION**

The technical solution of the present disclosure is described in detail below through embodiments and in conjunction with the accompanying drawings.

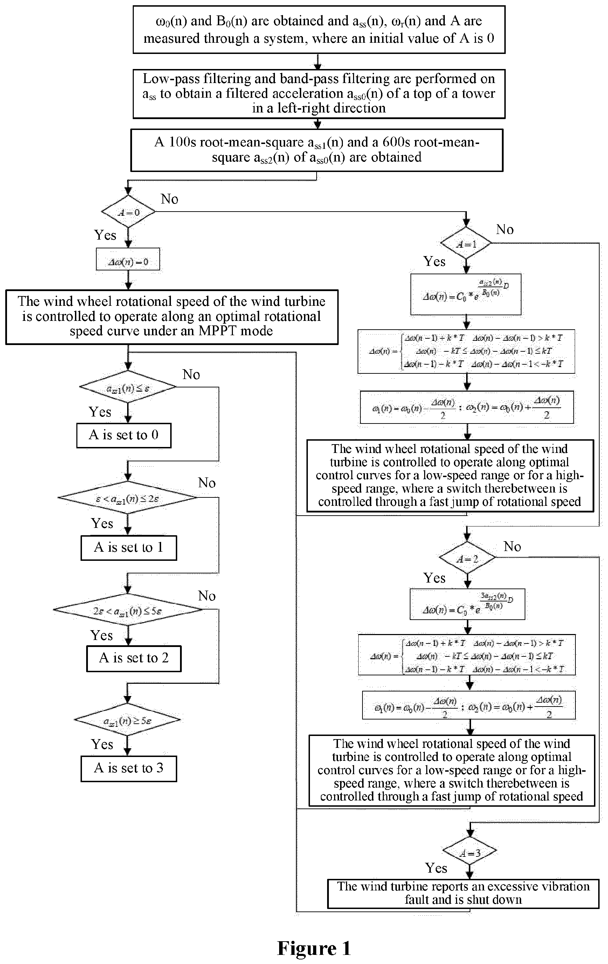

According to an embodiment, a control method for crossing a rotational speed resonance frequency of a flexible tower wind turbine is provided. As shown in Figure 1, the method includes steps (1) to (4).

In step (1), a damping ratio Bo(n) and a first-order modal frequency $\omega_0(n)$ of a tower in a left-right direction in an n-th control period are obtained through a tower modal on-line identification system; an acceleration ass(n) of a top of the tower in the left-right direction in the n-th control period is obtained through a tower vibration sensor; a wind wheel rotational speed $\omega_r(n)$ in the n-th control period is measured by using an encoder; and a flag A of an operation mode in the n-th control period is obtained, where an initial value of the flag A is set to 0.

In step (2), low-pass filtering and band-pass filtering are performed on the acceleration ass of the top of the tower in the left-right direction to obtain a filtered acceleration $a_{ss0}(n)$ of the top of the tower in the left-right direction.

In step (3), a 30-second root-mean-square $a_{ss1}(n)$ and a 600-second root-mean-square $a_{ss2}(n)$ of the filtered acceleration asso of the top of the tower in the left-right direction in the n-th control period are obtained.

In step (4), different operation states are performed based on different values of the flag A of the operation mode. Four specific cases are described as follows.

I. If the flag A=0, a wind wheel rotational speed offset $\Delta\omega(n)$ in the n-th control period is determined as $\Delta\omega(n) = 0$.

The wind wheel rotational speed of the wind turbine is controlled along an optimal rotational speed curve under a Maximum Power Point Tracking (MPPT) mode.

II. If the flag A=1, a jump offset $\Delta\omega(n)$ of a wind wheel rotational speed in the n-th control period is determined as

$$\Delta\omega(n) = C_0 * e^{\frac{a_{ss2}(n)}{B_0(n)}D}.$$

In the formula, $C_0$ represents an initial value of the jump offset of the wind wheel rotational speed, and D represents a constant.

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1 < -k*T \end{cases}.$$

In the formula, $\Delta\omega(n-1)$ represents a value of the jump offset of the wind wheel rotational speed in an (n-1)-th control period, k represents a limit value of the jump offset of the wind wheel rotational speed, and T represents a control period.

An upper limit $\omega_1(n)$ of the wind wheel rotational speed in a low-speed range is determined as

$$\omega_1(n) = \omega_0(n) - \frac{\Delta\omega(n)}{2}.$$

A lower limit $\omega_2(n)$ of the wind wheel rotational speed in a high-speed range is determined as

$$\omega_2(n) = \omega_0(n) + \frac{\Delta\omega(n)}{2}.$$

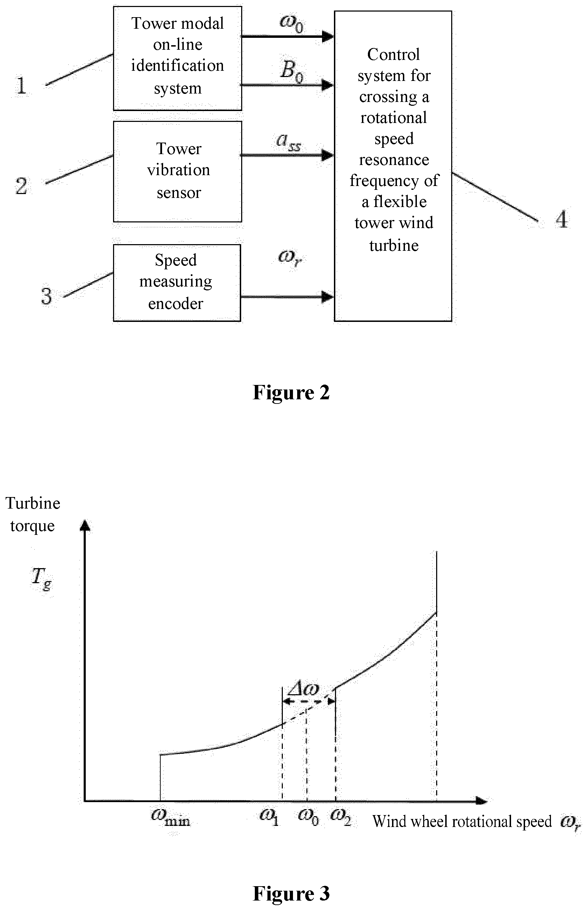

As shown in Figure 3, the wind wheel rotational speed of the wind turbine is controlled to operate along an optimal control curve for the low-speed range (having an upper limit of $\omega_1(n)$ and a lower limit equal to a minimum stable value $\omega_{min}$ of the wind wheel rotational speed), or along an optimal control curve for the high-speed range (having an upper limit equal to a maximum stable value $\omega_{max}$ of the wind wheel rotational speed and a lower limit of $\omega_2(n)$). A switch between the optimal control curve for the low-speed range and the optimal control curve for the high-speed range is controlled through a fast jump of rotational speed.

III. If the flag A=2, a jump offset $\Delta\omega(n)$ of a wind wheel rotational speed in the n-th control period is determined as

$$\Delta\omega(n) = C_0 * e^{\frac{3a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1 < -k*T \end{cases}.$$

An upper limit $\omega_1(n)$ of the wind wheel rotational speed in a low-speed range is determined as

$$\omega_1(n) = \omega_0(n) - \frac{\Delta\omega(n)}{2}.$$

A lower limit $\omega_2(n)$ of the wind wheel rotational speed in a high-speed range is determined as

$$\omega_2(n) = \omega_0(n) + \frac{\Delta\omega(n)}{2}.$$

As shown in Figure 3, the wind wheel rotational speed of the wind turbine is controlled to operate along an optimal control curve for the low-speed range (having an upper limit of $\omega_1(n)$ and a lower limit equal to a minimum stable value $\omega_{min}$ of the wind wheel rotational speed), or along an optimal control curve for the high-speed range (having an upper limit equal to a maximum stable value $\omega_{max}$ of the wind wheel rotational speed and a lower limit of $\omega_2(n)$). A switch between the optimal control curve for the low-speed range and the optimal control curve for the high-speed range is controlled through a fast jump of rotational speed.

IV. If the flag A=3, the wind turbine reports an excessive vibration fault and is shut down.

Values of the flag A is set according to the following rules:

setting the flag A to 0 if $a_{ss1}(n) \leq \varepsilon$;

setting the flag A to 1 if $\varepsilon < a_{ss1}(n) \leq 2\varepsilon$;

setting the flag A to 2 if $2\varepsilon < a_{ss1}(n) \leq 5\varepsilon$; and

setting the flag A to 3 if $a_{ss1}(n) > 5\varepsilon$,

where $\varepsilon$ is a small positive value.

A control system for crossing a rotational speed resonance frequency of a flexible tower wind turbine is provided. As shown in Figure 2, the system includes a tower modal on-line identification system 1, a tower vibration sensor 2, and a speed measuring encoder 3. The tower modal on-line identification system 1, the tower vibration sensor 2, and the speed measuring encoder 3 are connected to the control system 4 for crossing the rotational speed resonance frequency of the flexible tower wind turbine. The tower vibration sensor 2 is mounted at the top of the tower.

**Claims**

1. A control method for crossing a rotational speed resonance frequency of a flexible tower wind turbine, comprising:

    (1) obtaining basic calculation data;
    (2) processing an acceleration ass of a top of a tower in a left-right direction;
    (3) obtaining a root-mean-square of a filtered acceleration asso of the top of the tower in the left-right direction in an n-th control period; and
    (4) performing different operation states based on different values of an operation flag A.

2. The control method for crossing the rotational speed resonance frequency of the flexible tower wind turbine according to claim 1, wherein the basic calculation data in step (1) comprises:

    a damping ratio Bo(n) and a first-order modal frequency $\omega_0(n)$ of the tower in the left-right direction in the n-th control period obtained through a tower modal on-line identification system,
    an acceleration ass(n) of the top of the tower in the left-right direction in the n-th control period obtained through a tower vibration sensor,
    a wind wheel rotational speed $\omega_r(n)$ in the n-th control period measured by an encoder, and
    a flag A of an operation mode in the n-th control period, wherein an initial value of the flag A is set to 0.

3. The control method for crossing the rotational speed resonance frequency of the flexible tower wind turbine according to claim 1, wherein step (2) comprises:
    performing low-pass filtering and band-pass filtering on the acceleration ass of the top of the tower in the left-right direction to obtain the filtered acceleration $a_{ss0}(n)$ of the top of the tower in the left-right direction.

4. The control method for crossing the rotational speed resonance frequency of the flexible tower wind turbine according to claim 1, wherein step (3) comprises:
    obtaining a 30-secend root-mean-square $a_{ss1}(n)$ of the filtered acceleration asso of the top of the tower in the left-right direction in the n-th control period and a 600-secend root-mean-square $a_{ss2}(n)$ of the filtered acceleration asso of the top of the tower in the left-right direction in the n-th control period.

5. The control method for crossing the rotational speed resonance frequency of the flexible tower wind turbine according to claim 1, wherein step (4) comprises:
    in a case where the flag A=0,

    determining an offset $\Delta\omega(n)$ of a wind wheel rotational speed in the n-th control period as $\Delta\omega(n) = 0$, and
    controlling the wind wheel rotational speed of a wind turbine to operate along an optimal rotational speed curve under a Maximum Power Point Tracking (MPPT) mode.

6. The control method for crossing the rotational speed resonance frequency of the flexible tower wind turbine according to claim 1, wherein step (4) comprises:
in a case where the flag A=1,

determining a jump offset $\Delta\omega(n)$ of a wind wheel rotational speed in the n-th control period as

$$\Delta\omega(n) = C_0 * e^{\frac{a_{ss2}(n)}{B_0(n)}D},$$

where Co represents an initial value of the jump offset of the wind wheel rotational speed, and D represents a constant, and

$$\Delta\omega(n) = \begin{cases} \Delta\omega(n-1)+k*T & \Delta\omega(n)-\Delta\omega(n-1) > k*T \\ \Delta\omega(n) & -kT \leq \Delta\omega(n)-\Delta\omega(n-1) \leq kT \\ \Delta\omega(n-1)-k*T & \Delta\omega(n)-\Delta\omega(n-1 < -k*T \end{cases},$$

where $\Delta\omega(n-1)$ represents a value of the jump offset of the wind wheel rotational speed step in an (n-1)-th control period, k represents a limit value of the jump offset of the wind wheel rotational speed, and T represents a control period;
determining an upper limit $\omega_1(n)$ of the wind wheel rotational speed in a low-speed range as

$$\omega_1(n) = \omega_0(n) - \frac{\Delta\omega(n)}{2};$$

determining a lower limit $\omega_2(n)$ of the wind wheel rotational speed in a high-speed range as

$$\omega_2(n) = \omega_0(n) + \frac{\Delta\omega(n)}{2};$$

and
controlling the wind wheel rotational speed of a wind turbine to operate along an optimal control curve for the low-speed range, wherein the optimal control curve for the low-speed range has an upper limit of $\omega_1(n)$ and a lower limit equal to a minimum stable value $\omega_{min}$ of the wind wheel rotational speed; or controlling the wind wheel rotational speed of the wind turbine to operate along an optimal control curve for the high-speed range, wherein the optimal control curve for the high-speed range has an upper limit equal to a maximum stable value $\omega_{max}$ of the wind wheel rotational speed and a lower limit of $\omega_2(n)$, and wherein a switch between the optimal control curve for the low-speed range and the optimal control curve for the high-speed range is controlled through a fast jump of rotational speed.

7. The control method for crossing the rotational speed resonance frequency of the flexible tower wind turbine according to claim 1, wherein step (4) comprises:
in a case where the flag A=2,

determining a jump offset $\Delta\omega(n)$ of a wind wheel rotational speed in the n-th control period as

$$\Delta\omega(n) = C_0 * e^{\frac{3a_{ss2}(n)}{B_0(n)}D}$$

$$\Delta\omega(n) = \begin{cases} \Delta\omega(n-1)+k*T & \Delta\omega(n)-\Delta\omega(n-1)>k*T \\ \Delta\omega(n) & -kT \le \Delta\omega(n)-\Delta\omega(n-1) \le kT \\ \Delta\omega(n-1)-k*T & \Delta\omega(n)-\Delta\omega(n-1<-k*T \end{cases};$$

determining an upper limit $\omega_1(n)$ of the wind wheel rotational speed in a low-speed range as

$$\omega_1(n) = \omega_0(n) - \frac{\Delta\omega(n)}{2};$$

determining a lower limit $\omega_2(n)$ of the wind wheel rotational speed in a high-speed range as

$$\omega_2(n) = \omega_0(n) + \frac{\Delta\omega(n)}{2};$$

and
controlling the wind wheel rotational speed of a wind turbine to operate along an optimal control curve for the low-speed range, wherein the optimal control curve for the low-speed range has an upper limit of $\omega_1(n)$ and a lower limit equal to a minimum stable value $\omega_{min}$ of the wind wheel rotational speed; or controlling the wind wheel rotational speed of the wind turbine to operate along an optimal control curve for the high-speed range, wherein the optimal control curve for the high-speed range has an upper limit equal to a maximum stable value $\omega_{max}$ of the wind wheel rotational speed and a lower limit of $\omega_2(n)$, and wherein a switch between the optimal control curve for the low-speed range and the optimal control curve for the high-speed range is controlled through a fast jump of rotational speed.

8. The control method for crossing the rotational speed resonance frequency of the flexible tower wind turbine according to claim 1, wherein step (4) comprises:
in a case where the flag A=3, reporting an excessive vibration fault and shutting down a wind turbine.

9. The control method for crossing the rotational speed resonance frequency of the flexible tower wind turbine according to any one of claims 1, 5, 6, 7 and 8, wherein step (4) comprises:

setting the flag A to 0 if $a_{ss1}(n) \le \varepsilon$;
setting the flag A to 1 if $\varepsilon < a_{ss1}(n) \le 2\varepsilon$;
setting the flag A to 2 if $2\varepsilon < a_{ss1}(n) \le 5\varepsilon$; and
setting the flag A to 3 if $a_{ss1}(n) > 5\varepsilon$,
where $\varepsilon$ is a small positive value.

10. A control system for crossing a rotational speed resonance frequency of a flexible tower wind turbine, comprising a tower modal on-line identification system, a tower vibration sensor, and a speed measuring encoder, wherein

the tower modal on-line identification system, the tower vibration sensor, and the speed measuring encoder are connected to the control system for crossing the rotational speed resonance frequency of the flexible tower wind turbine, and
the tower vibration sensor is mounted at a top of a tower.

$\omega_0(n)$ and $B_0(n)$ are obtained and $a_{ss}(n)$, $\omega_r(n)$ and A are measured through a system, where an initial value of A is 0

Low-pass filtering and band-pass filtering are performed on $a_{ss}$ to obtain a filtered acceleration $a_{ss0}(n)$ of a top of a tower in a left-right direction

A 100s root-mean-square $a_{ss1}(n)$ and a 600s root-mean-square $a_{ss2}(n)$ of $a_{ss0}(n)$ are obtained

$A = 0$ — No → $A = 1$ — No

Yes ↓

$\Delta\omega(n) = 0$

The wind wheel rotational speed of the wind turbine is controlled to operate along an optimal rotational speed curve under an MPPT mode

$a_{ss1}(n) \leq \varepsilon$ — No

Yes ↓

A is set to 0

$\varepsilon < a_{ss1}(n) \leq 2\varepsilon$ — No

Yes ↓

A is set to 1

$2\varepsilon < a_{ss1}(n) \leq 5\varepsilon$ — No

Yes ↓

A is set to 2

$a_{ss1}(n) \geq 5\varepsilon$

Yes ↓

A is set to 3

Yes (A=1) ↓

$$\Delta\omega(n) = C_0 * e^{\frac{a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1) < -k*T \end{cases}$$

$$\omega_1(n) = \omega_0(n) - \frac{\Delta\omega(n)}{2} \; ; \; \omega_2(n) = \omega_0(n) + \frac{\Delta\omega(n)}{2}$$

The wind wheel rotational speed of the wind turbine is controlled to operate along optimal control curves for a low-speed range or for a high-speed range, where a switch therebetween is controlled through a fast jump of rotational speed

$A = 2$ — No

Yes ↓

$$\Delta\omega(n) = C_0 * e^{\frac{3a_{ss2}(n)}{B_0(n)}D}$$

$$\Delta\omega(n) = \begin{cases} \Delta\omega(n-1) + k*T & \Delta\omega(n) - \Delta\omega(n-1) > k*T \\ \Delta\omega(n) & -kT \leq \Delta\omega(n) - \Delta\omega(n-1) \leq kT \\ \Delta\omega(n-1) - k*T & \Delta\omega(n) - \Delta\omega(n-1) < -k*T \end{cases}$$

$$\omega_1(n) = \omega_0(n) - \frac{\Delta\omega(n)}{2} \; ; \; \omega_2(n) = \omega_0(n) + \frac{\Delta\omega(n)}{2}$$

The wind wheel rotational speed of the wind turbine is controlled to operate along optimal control curves for a low-speed range or for a high-speed range, where a switch therebetween is controlled through a fast jump of rotational speed

$A = 3$ — No

Yes ↓

The wind turbine reports an excessive vibration fault and is shut down

**Figure 1**

**Figure 2**

**Figure 3**

<table>
<tr><td colspan="2" align="center">**INTERNATIONAL SEARCH REPORT**</td><td colspan="2">International application No.<br>**PCT/CN2020/112048**</td></tr>
</table>

**A. CLASSIFICATION OF SUBJECT MATTER**

F03D 7/00(2006.01)i

According to International Patent Classification (IPC) or to both national classification and IPC

**B. FIELDS SEARCHED**

Minimum documentation searched (classification system followed by classification symbols)

F03D

Documentation searched other than minimum documentation to the extent that such documents are included in the fields searched

Electronic data base consulted during the international search (name of data base and, where practicable, search terms used)

CNABS; CNTXT; DWPI; SIPOABS: 共振, 穿越, 加速度, 均方根, vibrat+, resonance, speed,

**C. DOCUMENTS CONSIDERED TO BE RELEVANT**

| Category* | Citation of document, with indication, where appropriate, of the relevant passages | Relevant to claim No. |
|---|---|---|
| PX | CN 111502912 A (ZHEJIANG WINDEY CO., LTD.) 07 August 2020 (2020-08-07)<br>claims 1-10 | 1-10 |
| X | CN 105179184 A (GUANGDONG MINGYANG WIND POWER INDUSTRY GROUP CO.,<br>LTD.) 23 December 2015 (2015-12-23)<br>description, specific embodiments, and figures 1-4 | 1, 10 |
| A | CN 105179168 A (ZHEJIANG WINDEY CO., LTD.) 23 December 2015 (2015-12-23)<br>entire document | 1-10 |
| A | CN 108590956 A (GUODIAN UNITED POWER TECHNOLOGY CO., LTD.) 28 September<br>2018 (2018-09-28)<br>entire document | 1-10 |
| A | CN 103742359 A (CSR ZHUZHOU ELECTRIC LOCOMOTIVE RESEARCH INSTITUTE<br>CO., LTD.) 23 April 2014 (2014-04-23)<br>entire document | 1-10 |
| A | WO 2019138105 A1 (WOBBEN PROPERTIES GMBH) 18 July 2019 (2019-07-18)<br>entire document | 1-10 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 December 2020** | **11 January 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/112048**

| Patent document cited in search report | | | Publication date (day/month/year) | Patent family member(s) | | | Publication date (day/month/year) |
|---|---|---|---|---|---|---|---|
| CN | 111502912 | A | 07 August 2020 | None | | | |
| CN | 105179184 | A | 23 December 2015 | CN | 105179184 | B | 17 November 2017 |
| CN | 105179168 | A | 23 December 2015 | CN | 105179168 | B | 13 March 2018 |
| CN | 108590956 | A | 28 September 2018 | None | | | |
| CN | 103742359 | A | 23 April 2014 | CN | 103742359 | B | 01 June 2016 |
| WO | 2019138105 | A1 | 18 July 2019 | DE | 102018100726 | A1 | 18 July 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010273840
- CN 104405581 B